# EUROPÄISCHE PATENTSCHRIFT

(11) **EP 0 583 554 B1**
(45) Veröffentlichungstag und Bekanntmachung des Hinweises auf die Patenterteilung: **26.07.1995**
(21) Anmeldenummer: 93107846.3
(22) Anmeldetag: 13.05.1993
(51) Int. Cl.: B65D 63/10

(54) **Halteband aus Kunststoff**
Plastic bundle tie
Collier de serrage en matière plastique

(30) Priorität: 31.07.1992 DE 4225450
(43) Veröffentlichungstag der Anmeldung: 23.02.1994
(73) Patentinhaber: TRW United-Carr GmbH & Co. KG, D-67677 Enkenbach-Alsenborn (DE)
(72) Erfinder: Kraus, Willibald, W-6718 Grünstadt (DE)
(74) Vertreter: Schieschke, Klaus, Dipl.-Ing.

(56) Entgegenhaltungen:
- EP-A- 0 281 968
- EP-A- 0 420 452
- FR-A- 1 462 539
- US-A- 3 605 199
- US-A- 3 875 619
- US-A- 5 131 613

## Beschreibung

Die Erfindung bezieht sich auf ein Halteband aus Kunststoff zum Umschlingen, Haltern und Bündeln von Gegenständen nach dem Oberbegriff des Anspruchs 1.

Als Stand der Technik ist bereits ein derartiges Halteband bekannt (US-A-5 131 613), welches so konzipiert ist, daß die zu umbündelnden Gegenstände zunächst von einem Außenrohr umfaßt werden. Dieses Außenrohr wird von dem Bandteil umschlungen, wobei im Kopfbereich des Halteelements Haltestege und Führungsstege vorgesehen sind, um das gesamte zu halternde Bündel beschädigungsfrei zu befestigen.

Weiterer Stand der Technik sind Haltebänder (US-A-4 135 749, US-A-4 003 106, US-A-3 991 444, US-A-3 488 813, DE 23 28 955 C2, US-A-4 001 898, DE-36 43 641, DE-GM 87 12 545, DE-38 07 173 C2). Es handelt sich hierbei jeweils um unterschiedliche Konstruktionen, welche jedoch alle dem gleichen Zweck dienen, nämlich die umschlungenen Gegenstände sicher zu haltern.

Dieser sicheren Halterung sind jedoch dann Grenzen gesetzt, wenn eine axiale Sicherung gegen Verschieben gefordert ist, wenn es sich beispielsweise um sehr dünne zu halternde Rohre handelt oder wenn die zu halternden Gegenstände keine gleichmäßige Dicke aufweisen.

Der vorliegenden Erfindung liegt damit die Aufgabe zugrunde, ein Halteband der eingangs genannten Art so zu gestalten, daß bei einfachem konstruktiven Aufbau eine axiale Verschiebesicherung, eine sichere Halterung auch von dünnen Rohren und von Gegenständen gewährleistet ist, welche beispielsweise mit einem Wellrohr oder mit einem anderen profilierten Umschlingungselement versehen sind.

Diese Aufgabe wird erfindungsgemäß dadurch gelöst, daß der Haltesteg sich über die ganze Höhe des Kopfteils erstreckt, daß der Abstand der beiden Führungsstege voneinander auf die Breite des profilierten Bandteils abgestellt ist und daß die Längsstege derart in der Durchgangsöffnung angeordnet ist, daß sie in dieser eine Umlenkung und Führung des Bandteils bewirken.

Hierdurch ergibt sich der Vorteil einer einwandfreien axialen Verschiebesicherung des zu halternden Gegenstandes, wobei zusätzlich das Bandelement im Kopfbereich und in der Durchgangsöffnung eine gute Führung erfährt und sich so die Halteffektivität verbessert.

In weiterer Ausgestaltung der Erfindung kann der Haltesteg im mittleren Bereich des Kopfteils angeordnet sein.

Konstruktiv besteht weiterhin die Möglichkeit, daß die beiden Führungsstege die jeweilige Seitenwand des Kopfteils begrenzen. Den beiden Führungsstegen kann eine Nase auf der anderen Seite des Eintrittsbereichs der Durchgangsöffnung zugeordnet sein; diese Nase hat die Aufgabe, für einen Festsitz auch bei sehr kleinem Durchmesser der zu halternden Rohre zu sorgen.

In weiterer Ausgestaltung der Erfindung kann das Kopfteil an seiner Stirnseite eine dem Verriegelungselement gegenüberliegende federnde Zunge aufweisen, über welche das Verriegelungselement beaufschlagbar ist. Hierbei kann die federnde Zunge beispielsweise durch eine U-förmige Aussparung in der Stirnseite des Kopfteils gebildet sein, so daß auf einfache Weise durch Beaufschlagung dieser federnden Zunge beispielsweise über die Spitze eines Schraubenziehers das Bandteil aus seiner Verriegelung gelöst wird; das schrägverlaufende, federnde Verriegelungselement wird über die federnde Zunge aus seiner Rastposition herausbewegt, so daß sich das profilierte Bandteil aus dem Kopfteil herausziehen läßt. Das Bandteil kann nach einem anderem Merkmal der Erfindung an der dem Haltesteg gegenüberliegenden Seite einen Lagernocken aufweisen, welcher vorteilhafterweise als Anlagefläche bei der Halterung eines sehr dünnen Rohres durch das Halteband dient.

Weiterhin kann das Bandteil mit einem Lagerbereich versehen sein, wobei die Möglichkeit besteht, daß zwischen dem Bandteil und dem Lagerbereich eine Dichtlippe angeordnet ist. Damit läßt sich das erfindungsgemäße Halteband beispielsweise über einen Profilbolzen oder über eine anders gestaltete Ausführung des Lagerbereichs in einer Öffnung eines Trägers befestigen. Der Lagerbereich kann beispielsweise als profiliertes Eingriffselement ausgebildet sein, z.B. als sogenannter "Tannenbaumbolzen", oder als Hülse mit Innenverzahnung.

In weiterer Ausgestaltung der Erfindung kann der zu halternde Gegenstand von einem über den Haltesteg beaufschlagten Wellrohr oder von zwei mit den Führungsstegen zusammenwirkenden Bindern umgeben sein. Hierdurch ist gleichfalls auf einfache Weise eine sehr gute axiale Verschiebesicherung der zu halternden Rohre gewährleistet. Weiterhin kann das Bandteil im Lagerbereich mit einer Ausnehmung zur Zugentlastung versehen sein.

Die Erfindung wird nachfolgend anhand von in der Zeichnung dargestellten Ausführungsbeispielen näher beschrieben. In der Zeichnung zeigen:
- Fig. 1: einen Schnitt nach der Linie I-I in Fig. 2;
- Fig. 2: eine Draufsicht auf das Kopfteil mit gebrochenem Bandteil des erfindungsgemäßen Haltebandes;
- Fig. 3: eine andere Ausführungsmöglichkeit des Kopfteils im Mittelschnitt;
- Fig. 4: die Vorderansicht der Ausführungsform nach Fig. 3, teils gebrochen;
- Fig. 5 - 10: verschiedene Gestaltungsmöglichkeiten des erfindungsgemäßen Haltebandes sowie der zu lagernden Gegenstände in Seitenansicht, teils in perspektivischer Ansicht;
- Fig. 11a - g: verschiedene Gestaltungsmöglichkeiten des Lagerbereichs.

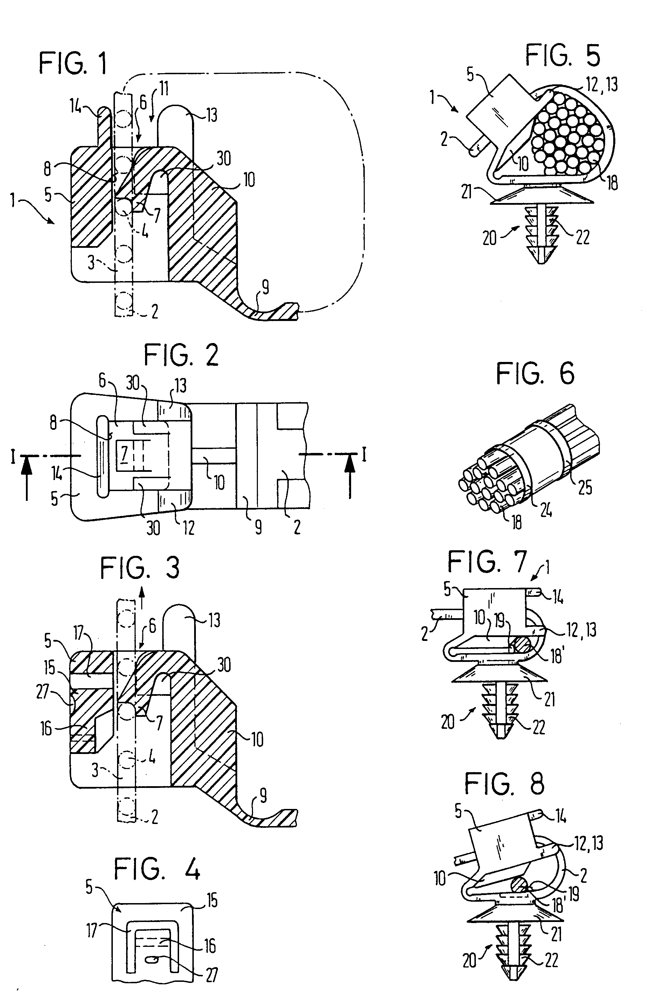

In Fig. 1 und 2 ist ein Halteband 1 zum Umschlingen, Haltern und Bündeln von Gegenständen in Draufsicht und im Schnitt I-I dargestellt. Dieses Halteband 1 besteht aus Kunststoff und weist einen profilierten Bandteil 2 auf, mit einem daran anschließenden Kopfteil 5. Das Bandteil 2 weist beispielsweise im Abstand voneinander liegende Quersprossen 4 auf, welche über Längsstege 3 gemäß Fig. 1 miteinander verbunden sind.

Das Kopfteil 5 besitzt eine Durchgangsöffnung 6 auf, in welcher ein schrägverlaufendes, federndes Verriegelungselement 7 angeordnet ist. Nach Fig. 1 beaufschlagt dieses Verriegelungselement 7 mit seiner vorderen profilierten Stirnfläche die entsprechende Sprosse 4 des Bandteils, so daß eine Verriegelung des Bandteils 2 innerhalb des Kopfteils 5 gegeben ist. Hierbei liegt das Bandteil einerseits an einer dem Verriegelungselement 7 gegenüberliegenden Gegenfläche 8 und andererseits an in der Durchgangsöffnung 6 angeordneten Längsstegen 30, 30 an. Diese Längsstege bewirken eine Umlenkung und Führung des Bandteils im Eintrittsbereich und in der Durchgangsöffnung 6.

Aus Fig. 1 und 2 ist ersichtlich, daß das Kopfteil 5 im Anschlußbereich 9 des Bandteils 2 mit einem Haltesteg 10 versehen ist. Dieser Haltesteg 10 ist gemäß Fig. 2 im mittleren Bereich des Kopfteils 5 angeordnet und erstreckt sich gemäß Fig. 1 ca. über die ganze Höhe des Kopfteils. Er hat die Aufgabe, auf den zu halternden Gegenstand einzuwirken und eine axiale Verschiebesicherung herzustellen. Er kann im oberen Bereich mit einer Eingriffsschräge versehen sein.

Im Eintrittsbereich 11 der Durchgangsöffnung 6 befinden sich darüber hinaus zwei Führungsstege 12 und 13, wie aus Fig. 1 und 2 ersichtlich. Der Abstand dieser beiden Führungsstege 12 und 13 voneinander ist auf die Breite des profilierten Bandteils 2 abgestellt, so daß dieses eine einwandfreie Führung erfährt. Aus Fig. 2 ist erkennbar, daß die beiden Führungsstege 12 und 13 die jeweilige Seitenwand des Kopfteils 5 begrenzen.

Bei der Ausführungsform nach Fig. 1 und 2 besteht außerdem die Möglichkeit, daß das Kopfteil, den beiden Führungsstegen 12, 13 gegenüberliegend, eine Nase 14 auf der anderen Seite des Eintrittsbereichs 11 der Durchgangsöffnung aufweist. Diese Nase 14 hat Anschlagfunktion beim Einfädeln des Bandteils in die Durchgangsöffnung 6. Sie kann außerdem zur Gewährleistung eines Festsitzes bei Halterung von sehr kleinen Rohren mittels des erfindungsgemäßen Haltebandes 1 dienen. Es besteht die nicht näher dargestellte Möglichkeit, die aus Fig. 1 und 2 ersichtliche Anordnung von Nase 14 und Führungsstegen 12, 13 zu vertauschen; die Nase 14 wäre dann nach Fig. 1 rechts der Durchgangsöffnung 6 und die Führungsstege 12, 13 links.

Um das federnde Verriegelungselement 7 auf einfache Weise aus seinem Eingriff mit der entsprechenden Sprosse 4 im Inneren des Kopfteils 5 zu lösen und damit das Bandteil 2 zu entriegeln, besteht nach Fig.3 und 4 die Möglichkeit, daß das Kopfteil 5 an seiner Stirnseite 15 eine federnde Zunge 16 aufweist, welche dem Verriegelungselement 7 gegenüberliegt. Diese federnde Zunge 16 wird beispielsweise durch eine U-förmige Aussparung 17 in der Stirnseite 15 des Kopfteils 5 gebildet. Wird nun in eine Ausnehmung 27 in der in Fig. 3 dargestellten Position beispielsweise die Spitze eines Schraubenziehers eingedrückt, so beaufschlagt die federnde Zunge 16 das Verriegelungselement 7 und hebt es aus seiner Verriegelungsposition mit der zugeordneten Sprosse 4 heraus. Damit kann das Bandteil 2 in Pfeilrichtung aus dem Kopfteil 5 herausgezogen werden.

Es ist nicht zwingend erforderlich, daß die federnde Zunge 16 durch die in Fig. 4 dargestellte Konfiguration gebildet wird. Es ist beispielsweise auch möglich, die Aussparung 17 anders zu gestalten, wobei jedoch in jedem Fall gewährleistet sein muß, daß die federnde Zunge 16 das Verriegelungselement 7 beaufschlagt.

Es besteht die Möglichkeit, daß das Halteband 1 im Bereich seines Bandteils 2 mit einem Lagerbereich 20 versehen ist. Diese Bauformen sind in Fig. 5 bis 11 dargestellt. Hierbei kann nach Fig. 5 das Bandteil 2 zunächst in eine federnde Dichtlippe 21 übergehen, unterhalb welcher ein Lagerbereich 20, beispielsweise in Form eines Profilbolzens 22 angeordnet ist. Damit besteht die Möglichkeit, daß dieser profilierte Bolzen 22 in eine Öffnung eines Trägers eingesetzt wird, so daß das gesamte Halteband 1 in diesem Träger befestigt wird. Über die Dichtlippe 21 ist außerdem eine Abdichtung gewährleistet.

Bei der Bauform nach Fig. 5 und 6 sind eine Anzahl von dünnen Rohren 18 von zwei Bindern 24 und 25 umgeben (Fig. 6). Hierbei beaufschlagt der Haltesteg 10 den Zwischenbereich zwischen diesen beiden Bindern 24 und 25, so daß die zu halternden dünnen Rohre 18 zwar um einen gewissen Bereich zu ihrer Längsachse justiert werden können (Toleranzausgleich), aber einwandfrei gegen unerwünschte axiale Verschiebung gesichert sind. Darüber hinaus ist über die Dichtlippe 21 wiederum ein dichter Abschluß des erfindungsgemäßen Haltebandes 1 gegenüber der Trägeröffnung gewährleistet.

Bei der Ausführungsform nach Fig. 7 ist ein einziges dünnes Kabel 18 durch das erfindungsgemäße Halteband 1 zu haltern. Hierzu kann das Halteband 1 an der dem Haltesteg 10 gegenüberliegenden Innenseite, also oberhalb eines Profilbolzens 22, mit mindestens einen Lagernocken 19 versehen sein, welcher als Anlage für das dünne zu halternde Kabel 18 dient, wobei dieses andererseits von dem oberen Bereich des Haltesteges 10 beaufschlagt wird. Auch hierdurch ist eine einwandfreie axiale Sicherung gegen unerwünschtes Verschieben gegeben.

Alternativ zu der Montagemöglichkeit nach Fig. 7 besteht auch nach Fig. 8 die Möglichkeit, daß das zu halternde dünne Kabel 18' auf der anderen Seite des Lagernockens 18' liegt und hier wiederum über einen Bereich des Haltesteges 10 so an seinem Außenumfang beaufschlagt wird, daß neben einer guten Halterung auch eine einwandfreie Sicherung gegen axiales Verschieben gewährleistet ist.

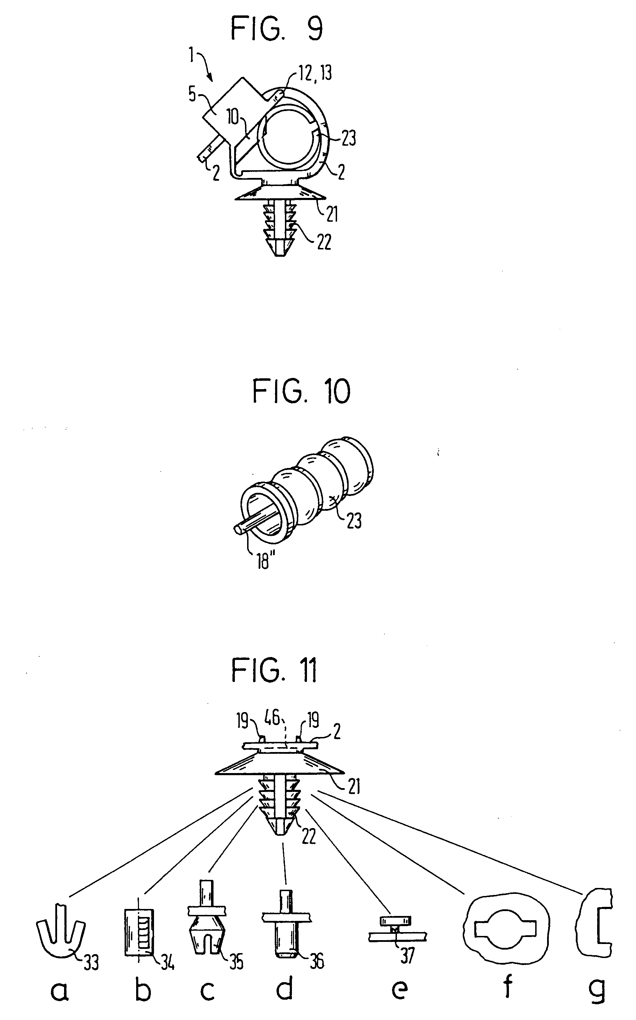

Bei der Bauausführung nach Fig. 9 und 10 kann der zu halternde Gegenstand 18'' von einem Wellrohr 23 umgeben sein (Fig. 10). Hierbei beaufschlagt nach Fig. 9 die Außenfläche des Haltesteges 10 das entsprechende Gegenprofil des Wellrohres 23, so daß über dieses Zwischenelement, d. h. das den rohrförmigen Gegenstand 18'' auf seiner Gesamtlänge umfassende Wellrohr 23 wiederum eine einwandfreie axiale Verschiebesicherung gewährleistet ist.

Während bei den Bauausführungen nach Fig. 5, 7, 8 und 9 der Lagerbereich 20 als Profilbolzen 22 ausgebildet ist, besteht nach Fig. 11 die Möglichkeit, diesen Lagerbereich gemäß den Ausführungsformen a) bis e) zu gestalten, nämlich Lagerbereich 33 mit zwei einander gegenüberliegenden Verriegelungsnasen (a), Lagerbereich 34 mit profilierter Innenhülse (b), geschlitzter doppelkonischer Zapfen 35 (c) sowie Profilhülse 36 (d) und Profilelement 37 (e). Dieses Profilelement 37 läßt sich in eine Langlochöffnung bzw. in eine anders gestaltete Öffnung nach den Figuren f) und g) einwandfrei einlagern.

Wie aus Fig. 11 darüber hinaus hervorgeht, kann das Bandteil 2 im Lagerbereich 20 mit einer Ausnehmung 46 versehen sein, in welche sich das zu halternde Rohr unter Einwirkung des Haltesteges 10 (Fig. 7, 8) einlagern kann, so daß sich neben einer guten Haltewirkung auch eine Zugentlastung ergibt. Beidseits dieser Ausnehmung 46 können sich zwei Lagernocken 19 befinden, wodurch analog Fig. 7 und 8 die Haltewirkung für ein dünnes Rohr erheblich verbessert.

Insgesamt ergibt sich ein aus Kunststoff bestehendes Halteband 1, welches in der Lage ist, in weitem Bereich unabhängig von der Dicke der zu halternden Rohre diese einwandfrei gegen unerwünschte axiale Verschiebung zu sichern und gleichzeitig eine gute Haltewirkung zu gewährleisten.

## Patentansprüche

1. Halteband aus Kunststoff zum Umschlingen, Haltern und Bündeln von Gegenständen (18; 18', 18'') mit einem profilierten Bandteil (2) und einem daran anschließenden Kopfteil (5), welcher innerhalb einer Durchgangsöffnung (6) ein mit dem Profil des Bandteils (2) zusammenwirkendes, schräg verlaufendes federndes Verriegelungsselement (7) und - diesem gegenüberliegend - eine Gegenfläche aufweist, wobei das Kopfteil (5) im Anschlußbereich (9) des Bandteils (2) mit mindestens einem Haltesteg (10) zum Beaufschlagen des zu halternden Gegenstands, im Eintrittsbereich (11) der Durchgangsöffnung (6) mit zwei Führungsstegen (12, 13) und in der Durchgangsöffnung (6) mit zwei Längsstegen (30) versehen ist,
dadurch gekennzeichnet,
daß der Haltesteg (10) sich über die gesamte Höhe des Kopfteils (5) erstreckt,
daß der Abstand der beiden Führungsstege (12, 13) voneinander auf die Breite des profilierten Bandteils (2) abgestellt ist und
daß die Längsstege (30) in der Durchgangsöffnung (6) derart angeordnet sind, daß sie in dieser eine Umlenkung und Führung des Bandteils (2) bewirken.

2. Halteband nach Anspruch 1,
dadurch gekennzeichnet,
daß der Haltesteg (10) im mittleren Bereich des Kopfteils (5) angeordnet ist.

3. Halteband nach Anspruch 1,
dadurch gekennzeichnet,
daß die beiden Führungsstege (12, 13) die jeweilige Seitenwandung des Kopfteils (5) begrenzen.

4. Halteband nach einem der vorhergehenden Ansprüche,
dadurch gekennzeichnet,
daß den beiden Führungsstegen (12, 13) eine Nase (14) auf der anderen Seite des Eintrittsbereichs (11) der Durchgangsöffnung (6) zugeordnet ist.

5. Halteband nach einem der vorhergehenden Ansprüche,
dadurch gekennzeichnet,
daß das Kopfteil (5) an seiner Stirnseite (15) eine dem Verriegelungselement (7) gegenüberliegende, federnde Zunge (16) aufweist, über welche das Verriegelungselement (7) beaufschlagbar ist.

6. Halteband nach Anspruch 5,
dadurch gekennzeichnet,
daß die federnde Zunge (16) durch eine U-förmige Aussparung (17) in der Stirnseite (15) des Kopfteils (5) gebildet ist.

7. Halteband nach einem der vorhergehenden Ansprüche,
dadurch gekennzeichnet,
daß das Halteband an der dem Haltesteg (10) gegenüberliegenden Seite mindestens einen Lagernocken (19) aufweist.

8. Halteband nach einem der vorhergehenden Ansprüche,
dadurch gekennzeichnet,
daß das Bandteil (2) mit einem Lagerbereich (20) versehen ist.

9. Halteband nach Anspruch 8,
dadurch gekennzeichnet,
daß zwischen dem Bandteil (2) und dem Lagerbereich (20) eine Dichtlippe (21) angeordnet ist.

10. Halteband nach Anspruch 8 und/oder 9,
dadurch gekennzeichnet,
daß der Lagerbereich (20) als profiliertes Eingriffselement (22; 33; 34; 35; 36; 37) ausgebildet ist.

11. Halteband nach Anspruch 1,
dadurch gekennzeichnet,
daß der Haltesteg (10) als Verschiebesicherung für mindestens ein die rohrförmigen Gegenstände (18, 18'') umfassendes Zwischenelement (24, 25, 23) ausgebildet ist, wobei die Außenfläche des Haltesteges (10) in ein Gegenprofil eines als Wellrohr (23) ausgebildeten Zwischenelements einlagerbar ist oder zwei im Abstand voneinander angeordnete Binder (24, 25) als Zwischenelement begrenzt.

12. Halteband nach einem oder mehreren der Ansprüche 1 bis 10,
dadurch gekennzeichnet,
daß das Bandteil (2) im Lagerbereich (20) mit einer Ausnehmung (46) zur Zugentlastung versehen ist.

## Claims

1. Fastening strap made of plastic for wrapping, fastening and tying articles (18; 18', 18'') having a profiled strap part (2) and an adjoining top part (5) which has, inside a through-opening (6), an obliquely extending, resilient locking element (7), which interacts with the profile of the strap part (2), and - opposite said locking element - a counter-surface, the top part (5) being provided, in the connection region (9) of the strap part (2), with at least one fastening web (10) for acting upon the article to be fastened, in the entry region (11) of the through-opening (6), with two guide webs (12, 13) and, in the through-opening (6) with two longitudinal webs (30), characterized in that the fastening web (10) extends over the entire height of the top part (5), in that the spacing of the two guide webs (12, 13) from one another is matched to the width of the profiled strap part (2), and in that the longitudinal webs (30) are arranged in the through-opening (6) in such a way that they bring about a deflection and guiding of the strap part (2) in said through-opening.

2. Fastening strap according to Claim 1, characterized in that the fastening web (10) is arranged in the central region of the top part (5).

3. Fastening strap according to Claim 1, characterized in that the two guide webs (12, 13) bound the respective side wall of the top part (5).

4. Fastening strap according to one of the preceding claims, characterized in that the two guide webs (12, 13) are assigned a lug (14) on the other side of the entry region (11) of the through-opening (6).

5. Fastening strap according to one of the preceding claims, characterized in that the top part (5) has, on its end face (15), a resilient tongue (16) which is located opposite the locking element (7) and by means of which the locking element (7) can be acted upon.

6. Fastening strap according to Claim 5, characterized in that the resilient tongue (16) is formed by a U-shaped cutout (17) in the end face (15) of the top part (5).

7. Fastening strap according to one of the preceding claims, characterized in that the fastening strap has at least one bearing cam (19) on the side opposite the fastening web (10).

8. Fastening strap according to one of the preceding claims, characterized in that the strap part (2) is provided with a bearing region (20).

9. Fastening strap according to Claim 8, characterized in that a sealing lip (21) is arranged between the strap part (2) and the bearing region (20).

10. Fastening strap according to Claim 8 and/or 9, characterized in that the bearing region (20) is designed as a profiled engagement element (22; 33; 34; 35; 36; 37).

11. Fastening strap according to Claim 1, characterized in that the fastening web (10) is designed as a safeguard against displacement for at least one intermediate element (24, 25, 23) enclosing the tubular articles (18, 18''), it being possible for the outer surface of the fastening web (10) to be mounted in a counter-profile of an intermediate element designed as a corrugated tube (23), or the outer surface of the fastening web (10) bounding two binders (24, 25), arranged spaced apart, as an intermediate element.

12. Fastening strap according to one or more of Claims 1 to 10, characterized in that the strap part (2) is provided, in the bearing region (20), with a cutout (46) for strain relief.

## Revendications

1. Collier de serrage en matière plastique conçu pour enlacer, retenir et regrouper des objets (18 ; 18', 18''), muni d'une partie profilée (2) formant ruban, à laquelle se rattache une partie (5) formant tête et présentant, à l'intérieur d'un orifice de passage (6), un élément élastique de verrouillage (7) s'étendant à l'oblique et coopérant avec le profil de la partie (2) formant ruban, ainsi qu'une surface complémentaire - à l'opposé dudit élément -, la partie (5) formant tête étant munie, dans la zone (9) de rattachement de la partie (2) formant ruban, d'au moins une membrure de retenue (10) destinée à solliciter l'objet à retenir ; de deux membrures de guidage (12, 13) dans la zone d'entrée (11) de l'orifice de passage (6) ; et de deux membrures longitudinales (30) dans l'orifice de passage (6),
caractérisé par le fait
que la membrure de retenue (10) s'étend sur toute la hauteur de la partie (5) formant tête ;
que l'espacement mutuel des deux membrures de guidage (12, 13) est adapté à la largeur de la partie profilée (2) formant ruban ; et
que les membrures longitudinales (30) occupent, dans l'orifice de passage (6), une position telle qu'elles provoquent, dans ce dernier, un renvoi et un guidage de la partie (2) formant ruban.

2. Collier de serrage selon la revendication 1,
caractérisé par le fait
que la membrure de retenue (10) est disposée dans la région centrale de la partie (5) formant tête.

3. Collier de serrage selon la revendication 1,
caractérisé par le fait
que les deux membrures de guidage (12, 13) délimitent la paroi latérale respective de la partie (5) formant tête.

4. Collier de serrage selon l'une des revendications précédentes,
caractérisé par le fait
qu'un bec (14) est affecté aux deux membrures de guidage (12, 13) sur l'autre côté de la zone d'entrée (11) de l'orifice de passage (6).

5. Collier de serrage selon l'une des revendications précédentes,
caractérisé par le fait
que la partie (5) formant tête présente, à sa face extrême (15), une languette élastique (16) qui est tournée à l'opposé de l'élément de verrouillage (7), et par l'intermédiaire de laquelle l'élément de verrouillage (7) peut être sollicité.

6. Collier de serrage selon la revendication 5,
caractérisé par le fait
que la languette élastique (16) est formée par une échancrure (17) configurée en U, pratiquée dans la face extrême (15) de la partie (5) formant tête.

7. Collier de serrage selon l'une des revendications précédentes,
caractérisé par le fait
que ce collier de serrage présente au moins un mentonnet de montage (19) sur le côté tourné à l'opposé de la membrure de retenue (10).

8. Collier de serrage selon l'une des revendications précédentes,
caractérisé par le fait
que la partie (2) formant ruban est pourvue d'une zone de montage (20).

9. Collier de serrage selon la revendication 8,
caractérisé par le fait
qu'une lèvre d'étanchement (21) est interposée entre la partie (2) formant ruban et la zone de montage (20).

10. Collier de serrage selon la revendication 8 et/ou 9,
caractérisé par le fait
que la zone de montage (20) est réalisée sous la forme d'un élément profilé (22 ; 33 ; 34 ; 35 ; 36 ; 37) de venue en prise.

11. Collier de serrage selon la revendication 1,
caractérisé par le fait
que la membrure de retenue (10) est conçue sous la forme d'un arrêt empêchant le coulissement d'au moins un élément intercalaire (24, 25, 23) ceinturant les objets tubulaires (18, 18''), la face externe de la membrure de retenue (10) pouvant venir se nicher dans un profil complémentaire d'un élément intercalaire réalisé sous la forme d'un tube annelé (23), ou bien délimitant deux attaches (24, 25) agencées à distance l'une de l'autre et remplissant la fonction d'un élément intercalaire.

12. Collier de serrage selon l'une ou plusieurs des revendications 1 à 10,
caractérisé par le fait
que la partie (2) formant ruban est munie d'un évidement (46) dans la zone de montage (20), en vue du soulagement en traction.
